# EUROPÄISCHE PATENTSCHRIFT

(11) **EP 2 668 047 B1**
(45) Veröffentlichungstag und Bekanntmachung des Hinweises auf die Patenterteilung: **05.11.2014**
(21) Anmeldenummer: 11799651.2
(22) Anmeldetag: 01.12.2011
(51) Int. Cl.: B60C 23/04, B29C 73/22, B60C 19/12

(54) **ANORDNUNG EINER REIFENDRUCK-SENSOREINHEIT**
ARRANGEMENT OF A TIRE PRESSURE SENSOR UNIT
AGENCEMENT D'UNE UNITÉ DE CAPTAGE DE PRESSION DE GONFLAGE DE PNEUMATIQUE

(30) Priorität: 25.01.2011 DE 102011003134
(43) Veröffentlichungstag der Anmeldung: 04.12.2013
(60) Teilanmeldung: 13185190.9
(73) Patentinhaber: Bayerische Motoren Werke Aktiengesellschaft, 80809 München (DE)
(72) Erfinder: HARTMANN, Jochen, 86415 Mering (DE); SCHWAB, Axel, 80538 München (DE); MEIER, Michael, 85540 Haar (DE)
(86) Internationale Anmeldenummer: PCT/EP2011/071554
(87) Internationale Veröffentlichungsnummer: WO 2012/100869

(56) Entgegenhaltungen:
- WO-A1-2011/060986
- DE-A1-102008 004 065
- DE-A1-102008 053 506
- DE-A1-102009 006 707
- US-A1- 2006 196 257
- US-A1- 2006 220 814
- US-B2- 7 271 709

## Beschreibung

Die Erfindung betrifft die Anordnung einer Reifendruck-Sensoreinheit an der Innenwand der Lauffläche eines Fahrzeug-Reifens in einer mit dieser Innenwand verbundenen Haltevorrichtung für die Sensoreinheit. Zum Stand der Technik wird insbesondere auf die DE 10 2009 006 707 A1 und die DE 10 2008 053 506 A1 verwiesen, ferner auf die DE 10 2007 060 861 A1.

Sensoreinheiten zur Überwachung des Reifendrucks sollen zuverlässig einen Druckverlust in einem Fahrzeug-Reifen aufzeigen, und zwar insbesondere auch dann, wenn die Lauffläche des Reifens von einem Gegenstand wie einem Nagel oder dergleichen durchstoßen wird. Dabei sollte im Falle einer solchen Beschädigung des Reifens das mit diesem Reifen ausgerüstete Fahrzeug noch einigermaßen sicher über eine gewisse Wegstrecke bewegt werden können, wofür ein an den Fahrer gerichteter Hinweis auf einen Druckverlust sehr hilfreich ist. Grundsätzlich bekannt sind dabei fest installierte Reifendruck-Sensoreinheiten und solche, die in einer am Reifen vorgesehenen und üblicherweise aus einem Gummimaterial bestehende Haltevorrichtung eingesetzt sind und aus dieser unter Einsatz höherer Kräfte wieder entfernbar sind. Bekannt ist ferner, dass solche Sensoreinheiten entweder mit einer langlebigen Batterie zur Bereitstellung der für die Funktion der Sensoreinheit benötigten Energie und/oder mit einer Vorrichtung zur Erzeugung von elektrischer Energie ausgerüstet sind, wobei letztere üblicherweise die Energie aus dem Reifenlatsch-Durchlauf gewinnen, d.h. aus der Verformung des rotierenden Reifens im Bereich der jeweiligen Radaufstandsfläche.

Wenn ein Fahrzeug-Luftreifen über einen entsprechend ungünstig auf der Fahrbahn liegenden Nagel oder einen anderen spitzen Gegenstand rollt, so kann dieser Nagel oder spitze Gegenstand die Lauffläche des Reifens durchstechen. Ein mehr oder weniger schneller Druckverlust im Reifen ist die Folge. Wenn ein Reifen-Durchstich abseits der Reifendruck-Sensoreinheit erfolgt, so zeigt die weiterhin funktionsfähige Sensoreinheit wie üblich einen daraus resultierenden Druckverlust an. Falls jedoch ein Reifen-Durchstich im Bereich der in einer an der Innenwand der Reifen-Lauffläche vorgesehenen Haltevorrichtung gehaltenen Reifendruck-Sensoreinheit erfolgt, so kann diese Sensoreinheit als Folge des Durchstichs entweder beschädigt und somit funktionsunfähig, d.h. defekt werden und dabei weiter in der Haltevorrichtung verbleiben oder es kann die Sensoreinheit durch den Nagel oder dgl. aus der Haltevorrichtung herausgedrückt werden. Im soeben erstgenannten Fall dauert es danach eine gewisse Zeit, bis eine im FahrzeugAufbau installierte Überwachungseinheit für den Reifendruck aller Fahrzeug-Reifen, die telemetrisch die Signale der einzelnen Reifendruck-Sensoreinheiten empfängt, den Fahrer auf den Funktionsausfall einer Sensoreinheit hinweist, da nicht jeder eventuell nur kurzfristige Ausfall in der Signalübertragung als Defekt interpretiert wird. Aber auch wenn der Hinweis auf den Funktionsausfall sehr schnell ergeht, ist doch fraglich, ob der Fahrer diesen Hinweis ebenso ernst nimmt wie einen Hinweis auf einen größeren Druckverlust im Reifen. Aber auch im zweitgenannten Fall kann unter widrigen Umständen eine gewisse Zeitspanne verstreichen bis der Fahrer des Fahrzeugs durch die genannte Überwachungseinheit auf den beschädigten Reifen und den daraus resultierenden Druckverlust hingewiesen wird.

Vorliegend soll daher eine Anordnung einer Reifendruck-Sensoreinheit an der Innenwand der Lauffläche eines Fahrzeug-Reifens in einer Haltevorrichtung für die Sensoreinheit aufgezeigt werden, die im Falle eines Reifen-Durchstichs im Bereich dieser Sensoreinheit eine hohe Betriebs-Sicherheit des Fahrzeugs gewährleistet (= Aufgabe der Erfindung).

Die Lösung dieser Aufgabe besteht in einer Anordnung einer Reifendruck-Sensoreinheit an der Innenwand der Lauffläche eines Fahrzeug-Reifens in einer mit dieser Innenwand verbundenen Haltevorrichtung für die Sensoreinheit, wobei die Haltevorrichtung einen mit der Innenwand verbundenen geschlossenen Bodenabschnitt aufweist und auf die der Sensoreinheit zugewandten Seite des Bodenabschnitts der Haltevorrichtung eine Dichtmasse aufgebracht ist, die im Falle eines Durchstichs eines Fremdkörpers durch die Innenwand und den Bodenabschnitt zumindest einen kurzfristigen Druckverlust durch das hierbei entstehende Loch verhindert, indem die Dichtmasse dieses Loch zumindest annähernd dicht verschließt. Vorteilhafte Weiterbildungen sind Inhalt der Unteransprüche.

Da im Falle eines Reifen-Durchstichs im Bereich einer Reifendruck-Sensoreinheit zumindest über einen gewissen Zeitraum ein die Fahrstabilität des Fahrzeugs gefährdender Druckverlust unter ungünstigen Umständen nur mit größerer Verzögerung vom Fahrer registriert werden könnte, wird mit der vorliegenden Erfindung vorgeschlagen, in einem solchen Falle die Wahrscheinlichkeit eines kurzfristigen Druckverlusts praktisch auszuschließen. Hierfür ist auf das der Sensoreinheit zugewandte bzw. benachbarte Material, das durch die auf der Innenseite der Reifen-Lauffläche üblicherweise durch Kleben befestigte Haltevorrichtung gebildet ist und üblicherweise aus Gummi besteht, jedenfalls im von der Haltevorrichtung begrenzten Bereich, in dem sich jedenfalls bei nicht beschädigtem Reifen die Reifendruck-Sensoreinheit befindet, eine grundsätzlich bekannte Dichtmasse aufgebracht, die im Falle eines Durchstichs eines Fremdkörpers durch die Innenwand und die Haltevorrichtung das hierbei entstehende Loch zumindest annähernd dicht verschließt. Bezüglich einer solchen Dichtmasse kann beispielsweise auf die eingangs zweitgenannte DE 10 2008 053 506 A1 verwiesen werden.

In dieser DE 10 2008 053 506 A1 ist ein Fahrzeugluftreifen mit einer Dichtmasse auf der Reifeninnenseite beschrieben, die bei einer Beschädigung des Reifens die hierbei entstehende Undichtigkeit verschließt, wobei dieser Reifen weiterhin mit einem elektrischen Warnsystem in Form eines die Dichtmasse bzw. die Reifeninnenseite überziehenden Netzes von elektrischen Drähten versehen ist, das bei einer Beschädigung des Reifens eine Warnmeldung auslöst. Das in dieser Schrift beschriebene Warnsystem unterscheidet sich somit signifikant von einer Reifendruck-Sensoreinheit, die Inhalt der vorliegenden Erfindung ist. In diesem Zusammenhang sei erwähnt, dass es in Verbindung mit einer erfindungsgemäßen Anordnung einer Reifendruck-Sensoreinheit im Hinblick auf die Betriebssicherheit des Fahrzeugs zwar günstig wäre, auch die gesamte Reifen-Innenseite vollflächig mit einer solchen Dichtmasse mit einem zusätzlichen Warnsystem zu versehen, jedoch wäre ein solcher Reifen unwirtschaftlich teuer und es würde sich hierdurch das Gewicht des Reifens in nachteiliger Weise erhöhen. Demgegenüber günstiger ist der Vorschlag der vorliegenden Erfindung, im wesentlichen nur den Bereich quasi unterhalb der Sensoreinheit mit einer solchen Dichtmasse zu versehen, wobei mit diesem Vorschlag wegen der Reifendruck-Sensoreinheit auch kein weiteres Warnsystem benötigt wird.

Eine vorliegend für die Sensoreinheit vorgesehene Haltevorrichtung mit einen geschlossenen Bodenabschnitt stellt sich quasi als zur Innenwand der Reifen-Lauffläche hin geschlossene Schachtel oder als Korb mit einem Boden dar, die die Sensoreinheit aufnimmt und wobei dieser Boden üblicherweise vollflächig mit der Innenseite des Reifens bzw. von dessen Lauffläche verbunden, insbesondere verklebt oder anvulkanisiert ist. Dabei ist die vorgeschlagene Dichtmasse auf die der Sensoreinheit zugewandte Seite des Bodenabschnitts der Haltevorrichtung aufgebracht, was einfach möglich ist, da die Haltevorrichtung üblicherweise aus einem dem ReifenMaterial vergleichbaren Gummimaterial besteht.

Eine erfindungsgemäße Anordnung ist besonders vorteilhaft für eine mit einer Vorrichtung zur Erzeugung von elektrischer Energie ausgestatteten Reifendruck-Sensoreinheit, da eine solche nicht mit einer anderen bekannten (vgl. hierzu die eingangs erstgenannte DE 10 2009 006 707 A1) Maßnahme zum Schutz einer Reifendruck-Sensoreinheit, nämlich mit einer einen Durchstich hemmenden Schutzschicht ausgerüstet werden kann, weil eine solche verstärkende Schutzschicht eine Energiegewinnung aus dem Reifenlatsch-Durchlauf erschwert. Für rein batteriebetriebene Sensoreinheiten kann es jedoch sinnvoll sein, diese zu deren Schutz zusätzlich auf ihrer der Reifen-Innenwand zugewandten Seite mit einem einen Durchstich hemmenden Material zu versehen oder zwischen der Sensoreinheit und der Reifen-Innenwand eine Schicht aus einem solchen Material vorzusehen. Gleiches gilt im übrigen für eine weitere aus der genannten DE 10 2009 006 707 A1 bekannten Maßnahme, nämlich das Aufbringen von gleitfähigem Material auf der der Reifen-Innenwand zugewandten Seite der Sensoreinheit.

Es kann vorgesehen sein, dass die Sensoreinheit mit einer anderen im Reifen angeordneten Einheit, beispielsweise einer Antenne, elektrisch verbunden sein muss, wobei diese elektrische Verbindung über zumindest eine in der Lauffläche im Bereich innerhalb der genannten Haltevorrichtung versehene elektrische Kontaktstelle erfolgt. Um für diesen Fall die erforderliche elektrische Übertragung zwischen der genannten Kontaktstelle und der Sensoreinheit sicherzustellen, sollte die Dichtmasse elektrisch leitfähig sein. Wenn mehrere elektrische Kontaktstellen von der Sensoreinheit zu verschiedenen im Reifen angeordneten Einheiten benötigt werden, so empfiehlt es sich, diese elektrischen Kontaktstellen solchermaßen auszubilden und/oder anzuordnen, dass bei der Montage der entsprechend angepasst gestalteten Sensoreinheit deren Lage-Orientierung zum Reifen sichtbar ist.

Eine in einer Haltevorrichtung gehaltene und aus dieser entfernbare Sensoreinheit kann grundsätzlich in einen anderen Reifen eingebaut und somit weiter oder wieder verwendet werden, jedoch sollte dann, wenn in dieser Sensoreinheit spezifische Daten aus der Vergangenheit, d.h. aus dem Einsatz im vorherigen Reifen resultierende Daten gespeichert sind, ausgeschlossen werden, dass diese Daten weiter verwendet werden, so wie dies grundsätzlich in der eingangs genannten DE 10 2007 060 861 beschrieben ist. Im Folgenden werden insbesondere für eine erfindungsgemäße Anordnung einer Reifendruck-Sensoreinheit weitere vorteilhafte Möglichkeiten aufgezeigt, wie in der Sensoreinheit bzw. in deren Steuerelektronik selbst registriert werden kann, dass mit hoher Wahrscheinlichkeit ein Reifen-Wechsel durchgeführt wurde, d.h. dass entweder diese Sensoreinheit in einem anderen Reifen oder ein Reifen mit dieser Sensoreinheit auf einer anderen Felge montiert wurde. So kann die Sensoreinheit zusätzlich einen Lichtsensor aufweisen, mittels dessen aus einem Lichteinfall auf die Sensoreinheit, der zeitlich nach einer von der Sensoreinheit registrierter Inbetriebnahme festgestellt wird, auf einen Reifen-Wechsel geschlossen wird, wonach zumindest einige der in der Sensoreinheit bereits gespeicherten Daten für eine Weiterverwendung gesperrt werden. Ferner kann in der Sensoreinheit ein Überprüfungsmodus vorgesehen sein, ob im Falle eines gemessenen Drucks, der im Bereich des Umgebung-Luftdrucks liegt, mit dem in üblichen Reifendruck-Sensoreinheiten vorgesehenen Beschleunigungssensor eine Beschleunigung registriert wird, anhand derer auf einen liegenden Reifen und folglich auf einen Einbau dieser Sensoreinheit in einen anderen Reifen geschlossen wird, wonach zumindest einige der in der Sensoreinheit bereits gespeicherten Daten für eine Weiterverwendung gesperrt werden.

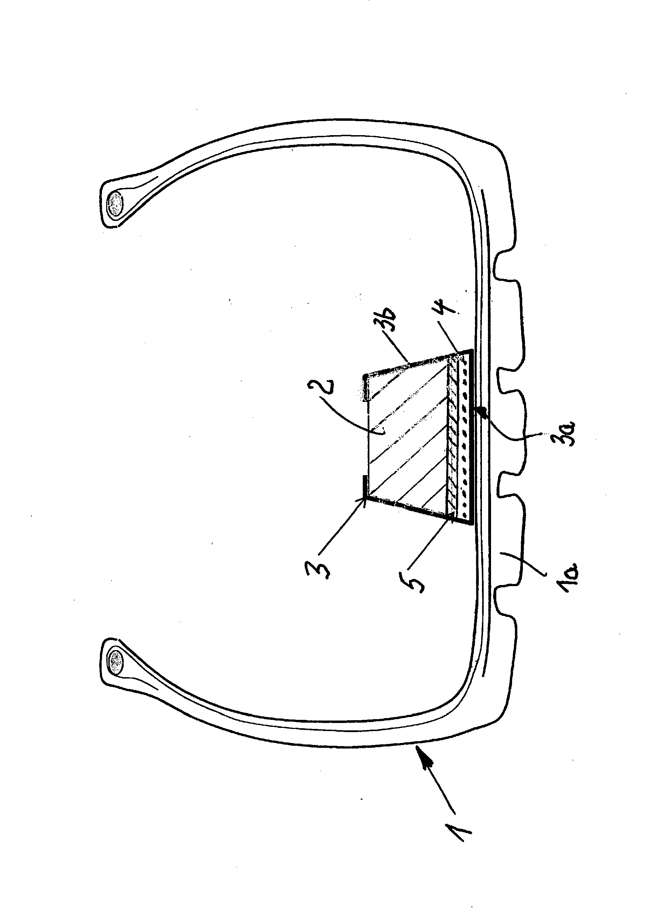

Die beigefügte einzige Figur zeigt einen Teil-Querschnitt eines Fahrzeug-Reifens (1) mit einer erfindungsgemäßen Reifendruck-Sensoreinheit (2), die in einer an die Innenseite der Lauffläche (1a) des Reifens (1) angeklebte oder anvulkanisierte Haltevorrichtung (3) eingesetzt ist. Diese aus einem Gummimaterial bestehende Haltevorrichtung (3) weist einen Bodenabschnitt (3a) auf, der vollflächig mit der Innenseite der Reifen-Lauffläche (1a) verbunden (verklebt oder anvulkanisiert) ist und ferner von dieser abgehende Seitenwände (3b), die ausgebildet sind, die Sensoreinheit (2) zwischen sich aufzunehmen und in der Haltevorrichtung (3) zu halten, was aufgrund der Elastizität des Gummimaterials einfach möglich ist.

Auf die der Sensoreinheit (2) zugewandte Seite des Bodenabschnitts (3a) der Haltevorrichtung (3) ist eine Dichtmasse (4) aufgebracht, die in diesem Bereich im Falle eines Durchstichs eines Fremdkörpers durch die Lauffläche (1a) bzw. durch die Reifen-Innenwand und durch den Bodenabschnitt (3a) das hierbei entstehende Loch zumindest annähernd dicht verschließt. Als zusätzliche, jedoch nicht unbedingt notwendige weitere Maßnahme zum Schutz der Sensoreinheit (2) im Falle eines Reifen-Durchstichs im Bereich dieser Sensoreinheit (2) ist unterhalb von deren der Lauffläche (1a) zugewandten Seite eine Schicht von einem einen Durchstich hemmenden oder gleitfähigem Material (5) vorgesehen.

## Patentansprüche

1. Anordnung einer Reifendruck-Sensoreinheit (2) an der Innenwand der Lauffläche (1a) eines Fahrzeug-Reifens (1) in einer mit dieser Innenwand verbundenen Haltevorrichtung (3) für die Sensoreinheit (2), wobei die Haltevorrichtung (3) einen mit der Innenwand verbundenen geschlossenen Bodenabschnitt (3a) aufweist, **dadurch gekennzeichnet, dass** auf die der Sensoreinheit (2) zugewandten Seite des Bodenabschnitts (3a) der Haltevorrichtung (3) eine Dichtmasse (4) aufgebracht ist, die im Falle eines Durchstichs eines Fremdkörpers durch die Innenwand und den Bodenabschnitt (3a) zumindest einen kurzfristigen Druckverlust durch das hierbei entstehende Loch verhindert, indem die Dichtmasse (4) dieses Loch zumindest annähernd dicht verschließt.

2. Anordnung nach Anspruch 1,
**dadurch gekennzeichnet, dass** die Sensoreinheit (2) auf ihrer der Reifen-Innenwand zugewandten Seite mit einem einen Durchstich hemmenden oder gleitfähigem Material (5) versehen ist oder dass zwischen der Sensoreinheit (2) und der Reifen-Innenwand eine Schicht aus einem solchen Material (5) vorgesehen ist.

3. Anordnung nach Anspruch 1 oder 2,
**dadurch gekennzeichnet, dass** die Dichtmasse (4) elektrisch leitfähig ist und an der Reifen-Innenwand zumindest eine elektrische Kontaktstelle zur Sensoreinheit vorgesehen ist.

4. Anordnung nach Anspruch 3,
**dadurch gekennzeichnet, dass** mehrere elektrische Kontaktstellen solchermaßen ausgebildet und angeordnet sind, dass für die Montage der entsprechend gestalteten Sensoreinheit deren Lage-Orientierung zum Reifen sichtbar ist.

5. Anordnung nach einem der vorangegangenen Ansprüche,
**dadurch gekennzeichnet, dass** die Sensoreinheit zusätzlich einen Lichtsensor aufweist, mittels dessen aus einem Lichteinfall auf die Sensoreinheit, der zeitlich nach einer von der Sensoreinheit registrierter Inbetriebnahme festgestellt wird, auf einen Einbau dieser Sensoreinheit in einen anderen Reifen geschlossen wird, wonach zumindest einige der in der Sensoreinheit bereits gespeicherten Daten für eine Weiterverwendung gesperrt werden.

6. Anordnung nach einem der vorangegangenen Ansprüche,
**dadurch gekennzeichnet, dass** in der Sensoreinheit ein Überprüfungsmodus vorgesehen ist, ob im Falle eines gemessenen Drucks, der im Bereich des Umgebung-Luftdrucks liegt, eine Beschleunigung registriert wird, anhand derer auf einen liegenden Reifen und folglich auf einen Einbau dieser Sensoreinheit in einen anderen Reifen geschlossen wird, wonach zumindest einige der in der Sensoreinheit bereits gespeicherten Daten für eine Weiterverwendung gesperrt werden.

## Claims

1. An arrangement for a tyre pressure sensor unit (2) on the inner wall of the tread (1a) of a vehicle tyre (1) in a holding device (3), which is connected to this inner wall, for the sensor unit (2), wherein the holding device (3) has a closed base portion (3a) connected to the inner wall, **characterised in that** a sealing compound (4) is applied to the side facing the sensor unit (2) of the base portion (3a) of the holding device (3), said sealing compound, in the event of a foreign body puncturing the inner wall and the base portion (3a), at least preventing a short-term pressure loss through the hole produced by this, **in that** the sealing compound (4) closes this hole at least approximately tightly.

2. An arrangement according to claim 1, **characterised in that** the sensor unit (2) is provided with a puncture-inhibiting or low-friction material (5) on its side facing the inner wall of the tyre or **in that** a layer of a material (5) such as this is provided between the sensor unit (2) and the inner wall of the tyre.

3. An arrangement according to claim 1 or 2, **characterised in that** the sealing compound (4) is electrically conductive and at least one electric contact point for the sensor unit is provided on the inner wall of the tyre.

4. An arrangement according to claim 3, **characterised in that** a plurality of electric contact points are configured and arranged in such a way that to mount the correspondingly designed sensor unit, the positional orientation thereof with respect to the tyre is visible.

5. An arrangement according to any one of the preceding claims, **characterised in that** the sensor unit additionally has a light sensor, by means of which from light incident on the sensor unit, which is determined after a start-up recorded by the sensor unit, an installation of this sensor unit in another tyre is inferred, after which at least some of the data already stored in the sensor unit are blocked for further use.

6. An arrangement according to any one of the preceding claims, **characterised in that** a checking mode is provided in the sensor unit for whether, in the event of a measured pressure lying within the range of the ambient air pressure, an acceleration is recorded, with the aid of which a horizontal tyre and consequently an installation of this sensor unit in another tyre is inferred, after which at least some of the data already stored in the sensor unit are blocked for further use.

## Revendications

1. Agencement d'une unité de détection (2) de la pression d'un pneumatique sur la paroi interne de la surface de roulement (1a) d'un pneumatique de véhicule (1) dans un dispositif de retenue (3) de l'unité de détection (2) relié à cette paroi interne, dans lequel le dispositif de retenue (3) comporte une partie de fond fermée (3a) reliée à la paroi interne,
**caractérisée en ce que**
sur la face de la partie de fond (3a) du dispositif de retenue (3) tournée vers l'unité de détection (2) est appliquée une masse d'étanchéité (4) qui, en cas de pénétration d'un corps étranger au travers de la paroi interne et de la partie de fond (3a), empêche au moins une perte de pression à court terme par le trou ainsi créé dans la mesure où la masse d'étanchéité (4) ferme ce trou de façon au moins essentiellement étanche.

2. Agencement conforme à la revendication 1,
**caractérisé en ce que**
l'unité de détection (2) est équipée sur sa face tournée vers la paroi interne du pneumatique d'un matériau (5) lubrifiant ou ralentissant la perforation, ou une couche d'un tel matériau (5) est prévue, entre l'unité de détection (2) et la paroi interne du pneumatique.

3. Agencement conforme à la revendication 1 ou 2,
**caractérisé en ce que**
la masse d'étanchéité (4) est électriquement conductrice et il est prévu sur la paroi interne du pneumatique au moins un emplacement de contact électrique pour l'unité de détection.

4. Agencement conforme à la revendication 3,
**caractérisé en ce que** plusieurs emplacements de contact électrique sont réalisés et montés de sorte que pour le montage de l'unité de détection qui est conformée en correspondance leur orientation et leur position par rapport au pneumatique soient visibles.

5. Agencement conforme à l'une des revendications précédentes,
**caractérisé en ce que**
l'unité de détection comporte en outre un capteur de lumière au moyen duquel, on déduit d'une incidence de lumière sur l'unité de détection constatée chronologiquement après une mise en fonctionnement enregistrée par l'unité de détection, à un montage de cette unité de détection dans un autre pneumatique, et au moins certaines des données déjà enregistrées dans l'unité de détection sont bloquées pour la poursuite de l'utilisation.

6. Agencement conforme à l'une des revendications précédentes,
**caractérisé en ce que**
dans l'unité de détection il est prévu un mode de contrôle permettant de vérifier si, dans le cas d'une pression mesurée qui est située dans la plage de la pression de l'air atmosphérique, une accélération est enregistrée, à partir de laquelle on conclut à un pneumatique à plat et par suite à un montage de cette unité de détection dans un autre pneumatique, et au moins certaines des données déjà enregistrées dans l'unité de détection sont bloquées pour la poursuite de l'utilisation.
